# EUROPÄISCHE PATENTSCHRIFT

(11) **EP 2 825 604 B1**
(45) Veröffentlichungstag und Bekanntmachung des Hinweises auf die Patenterteilung: **24.02.2016**
(21) Anmeldenummer: 13709210.2
(22) Anmeldetag: 14.03.2013
(51) Int. Cl.: C09D 5/36, B05D 5/06, C09D 7/00, C09D 7/12, C09D 17/00

(54) **METALLPIGMENTE ENTHALTENDE, LÖSUNGSMITTELHALTIGE PIGMENTPASTEN UND IHRE VERWENDUNG ZUR HERSTELLUNG VON EFFEKTGEBENDEN LÖSUNGSMITTELHALTIGEN BESCHICHTUNGSSTOFFEN**
METAL PIGMENT- AND SOLVENT-CONTAINING PIGMENT PASTES, AND USE THEREOF FOR PRODUCING EFFECT-PRODUCING SOLVENT-CONTAINING COATING MATERIALS
PÂTES PIGMENTAIRES CONTENANT DES PIGMENTS MÉTALLIQUES, EN MILIEU SOLVANT, ET LEUR UTILISATION POUR LA PRODUCTION DE SUBSTANCES DE REVÊTEMENT À EFFET EN MILIEU SOLVANT

(30) Priorität: 14.03.2012 US 201261610491 P; 14.03.2012 EP 12159408
(43) Veröffentlichungstag der Anmeldung: 21.01.2015
(73) Patentinhaber: BASF Coatings GmbH, 48165 Münster (DE)
(72) Erfinder: LAVALAYE, Jorn, 97082 Würzburg (DE); KUNSZT, Carmen, 97762 Hammelburg (DE); LÖW, Norbert, 91413 Neustadt/Aisch (DE)
(86) Internationale Anmeldenummer: PCT/EP2013/055269
(87) Internationale Veröffentlichungsnummer: WO 2013/135831

(56) Entgegenhaltungen:
- WO-A1-03/097752
- WO-A1-2010/121791
- DE-A1-102004 049 095

## Beschreibung

### Gebiet der Erfindung

Die vorliegende Erfindung betrifft blättchenförmige Effektpigmente enthaltende, lösemittelhaltige Pigmentpasten. Außerdem betrifft die vorliegende Erfindung die Verwendung der blättchenförmigen Effektpigmente enthaltenden, lösemittelhaltigen Pigmentpasten für die Herstellung von effektgebenden, lösemittelhaltigen Beschichtungsstoffen. Außerdem betrifft die vorliegende Erfindung ein Verfahren zur Herstellung von effektgebenden lösemittelhaltigen Beschichtungsstoffen.

### Stand der Technik

Die Verwendung von blättchenförmigen Effektpigmenten, wie Micapigmenten oder Metalleffektpigmenten, in lösemittelhaltigen Basislacken an sich ist seit langem bekannt.

Wegen ihrer vergleichsweise großen Empfindlichkeit gegen mechanische Einwirkung bereiten blättchenförmige Effektpigmente, insbesondere Micapigmente und Metalleffektpigmente, besonders Aluminiumpigmente, allerdings Probleme bei der Einarbeitung in lösemittelhaltige Beschichtungsstoffe, insbesondere lösemittelhaltige Basislacke. In den europäischen Patentanmeldungen EP 1 504 068 A1, EP 1 534 792 B1 ,WO 2010/121 791 A1 und EP 1 799 783 A1 werden lagerstabile Mica-, Metall- und/oder Aluminium- Effektpigmentpasten auf Wasserbasis beschrieben. In den europäischen Patentanmeldungen EP 0 578 645 B1, EP 0 662 993 B1 und EP 0 752 455 B1 werden lagerstabile Mica-, Metall- und/oder Aluminium-Effektpigmentpasten auf Lösemittelbasis beschrieben.

Die Mica- und Metalleffektpigmente werden üblicherweise in organischen Lösemitteln angeteigt oder angerieben. Nachteilig ist, dass die betreffenden Pigmentpasten nur eine sehr begrenzte Lagerfähigkeit von maximal wenigen Stunden oder Tagen haben. Danach kommt es zum Absetzen und zur Bildung von Stippen und Koagulaten, was die Qualität der farb- und/oder effektgebenden Mehrschichtlackierungen unter anderem durch Wolkenbildung verringert. Auch für die großtechnische Lackierung in der Linie beim Automobilhersteller ist die mangelhafte Lagerfähigkeit ein großes Problem. So können die Pigmentpasten nicht auf Vorrat in größeren Mengen produziert werden, was aber aus wirtschaftlichen Gründen wünschenswert wäre. Durch Probleme mit der Transportfähigkeit, z.B. durch die geringe Lagerstabilität, entfällt die Möglichkeit, die Pigmentpasten an einem Produktionsstandort mit optimalen Produktions-Bedingungen herzustellen und zu den Kunden zu transportieren. So müssen die Pigmentpasten für das Nachtönen von lösemittelhaltigen Basislacken jedes Mal neu hergestellt werden, was den Produktionsablauf verkompliziert und verlangsamt.

Aufgabe der vorliegenden Erfindung ist es, eine neue blättchenförmige Effektpigmente enthaltende, lösemittelhaltige Pigmentpaste bereitzustellen, die die Nachteile des Standes der Technik nicht mehr länger aufweist, sondern die stabil, lagerfähig, transportfähig und ohne Beschädigung der blättchenförmigen Effektpigmente in einfacher Weise herstellbar ist. Vorzugsweise soll die neue, blättchenförmige Effektpigmente enthaltende, lösemittelhaltige Pigmentpaste bis zu 3 Monate ohne Absetzen und ohne Bildung von Stippen und Koagulaten lagerfähig und aufrührbar sein.

Die neue, blättchenförmige Effektpigmente enthaltende, lösemittelhaltige Pigmentpaste soll an einem Produktionsstandort, der optimale Bedingungen bietet, hergestellt und zu den Kunden, insbesondere zu den Automobilherstellern, transportiert werden können. In dieser Weise soll der Aufwand für die Lagerhaltung signifikant verringert und der Prozess der Herstellung von pigmentierten Beschichtungen vereinfacht werden. Außerdem soll die neue, blättchenförmige Effektpigmente enthaltende, lösemittelhaltige Pigmentpaste in den Ringleitungen der Lackieranlagen problemlos geschert werden können, ohne dass sie geschädigt wird.

Die neue, blättchenförmige Effektpigmente enthaltende, lösemittelhaltige Pigmentpaste soll die Herstellung lagerfähiger, transportierbarer, färbtonstabiler, effektstabiler und leicht applizierbarer, lösemittelhaltige Beschichtungsstoffe, insbesondere lösemittelhaltige Basislacke, ermöglichen, die hervorragende farb- und/oder effektgebende Mehrschicht-Lackierungen von Automobilqualität (vgl. hierzu auch das europäische Patent EP 0 352 298 B 1, Seite 15, Zeile 42, bis Seite 17, Zeile 40) liefern.

Die Aufgabe wird durch die blättchenförmige Effektpigmente enthaltende, lösemittelhaltige Pigmentpaste (PP) gelöst, welche, bezogen auf ihre gesamte Zusammensetzung,
(A) 10 bis 30 Gew.-% mindestens eines blättchenförmigen Effektpigments (P),
(B) 0,1 bis 2,0 Gew.-% einer wachsartigen Verbindung (W),
(C) 0,1 bis 3,0 Gew.-% von Celluloseacetobutyrat (CAB),
(D) 2,0 bis 20 Gew.-% eines Polyesterharzes (PE),
(E) 2,0 bis 10 Gew.-% eines Melaminharzes,
(F) 0,05 bis 0,5 Gew.-% eines Verdickers auf Harnstoffbasis,
(G) 30 bis 80 Gew.-% von organischen Lösemitteln
enthält und im Folgenden als »erfindungsgemäße Pigmentpaste (PP)« bezeichnet wird.

Die erfindungsgemäße Pigmentpaste (PP) kann darüber hinaus alle üblicherweise in Pigmentpasten und/oder Beschichtungsstoffen verwendeten weiteren Bestandteile und Additive enthalten.

Außerdem werden die erfindungsgemäßen Pigmentpasten (PP) zur Herstellung von effektgebenden, insbesondere farb- und effektgebenden, lösemittelhaltigen Beschichtungsstoffen (B) verwendet. Diese Verwendung der erfindungsgemäßen Pigmentpasten (PP) wird im Folgenden als »erfindungsgemäße Verwendung« bezeichnet wird.

Im Folgenden wird das Verfahren zur Herstellung eines effektgebenden Beschichtungsstoffs (B) als »erfindungsgemäßes Verfahren« bezeichnet.

Im Hinblick auf den Stand der Technik ist es überraschend und für den Fachmann nicht vorhersehbar, dass die Aufgabe, die der vorliegenden Erfindung zugrunde liegt, mit Hilfe der erfindungsgemäßen Pigmentpaste (PP) gelöst wird, ohne dass dabei die eingangs geschilderten Nachteile des Standes der Technik auftreten.

Die erfindungsgemäße Pigmentpaste (PP) ist ohne Beschädigung der blättchenförmigen Effektpigmente (P) in einfacher Weise herstellbar. Es werden nur geringe Mengen an Additiven den blättchenförmigen Effektpigmenten (P) zugesetzt und dennoch ist die erfindungsgemäße Pigmentpaste (PP) überraschenderweise stabil, transportfähig und lagerfähig. Besonders überraschend ist, dass die erfindungsgemäße Pigmentpaste (PP) bis zu 3 Monate ohne Absetzen und ohne Bildung von Stippen und Koagulaten lagerfähig ist.

Die erfindungsgemäße Pigmentpaste (PP) kann an einem Produktionsstandort, der optimale Bedingungen bietet, hergestellt und zu den Kunden, insbesondere zu den Automobilherstellern, transportiert werden. In dieser Weise kann der Aufwand für die Lagerhaltung beim Kunden signifikant verringert werden und der Herstellprozess von Beschichtungen vereinfacht werden. Außerdem kann die erfindungsgemäße Pigmentpaste (PP) in den Ringleitungen der Lackieranlagen problemlos geschert werden, ohne dass sie geschädigt wird.

Die erfindungsgemäße Pigmentpaste (PP) eignet sich zur Herstellung von lagerfähigen, transportfähigen, farbtonstabilen, effektstabilen, leicht applizierbaren, lösemittelhaltigen Beschichtungsstoffen (B), insbesondere von lösemittelhaltigeh Basislacken (BL).

Diese lösemittelhaltigen Basislacke (BL) ermöglichen die Herstellung hervorragender effektgebender oder farb- und effektgebender Mehrschichtlackierungen von Automobilqualität. Gemäß dem europäischen Patent EP 0 352 298 B1, Seite 15, Zeile 42, bis Seite 17, Zeile 14, bedeutet dies, dass die betreffenden Mehrschichtlackierungen
(1) einen hohen Glanz,
(2) eine hohe Abbildungsunterscheidbarkeit,
(3) ein hohes und gleichmäßiges Deckvermögen,
(4) eine einheitliche Trockenschichtdicke,
(5) eine hohe Benzinbeständigkeit,
(6) eine hohe Lösemittelbeständigkeit,
(7) eine hohe Säurebeständigkeit,
(8) eine hohe Härte,
(9) eine hohe Abriebfestigkeit,
(10) eine hohe Kratzfestigkeit,
(11) eine hohe Schlagfestigkeit,
(12) eine hohe Zwischenschichthaftung und Haftung auf dem Substrat und
(13) eine hohe Witterungsstabilität und UV-Beständigkeit
aufweisen.

Pigmentpasten, auch Pigmentkonzentrate oder Pigmentpräparationen, sind pigmentierte Systeme mit möglichst hohem Pigmentgehalt und möglichst wenig an Bindemittel, wobei die Pigmente in dispergierter Form in den Pigmentpasten vorliegen. Pigmentpasten werden zur Herstellung und Abtönung von Zielsystemen, wie Lacke oder andere Beschichtungsstoffe, verwendet, dabei werden die Pigmentpasten je nach Einsatzgebiet (Fertigung oder Abtönung) in unterschiedlichen Einsatzmengen grundsätzlich dem gewünschten, bindemittelhaltigen Zielsystem zugesetzt. Das Ziel der Pigmentpasten ist die Vereinfachung der Einarbeitung der Pigmente in Beschichtungsstoffen. Pigmentpasten werden nicht direkt zur Beschichtung von Substraten eingesetzt, sondern dienen grundsätzlich als Additive zur Herstellung und Abtönung von Beschichtungssystemen, wie Lacken.

Die erfindungsgemäße Pigmentpaste (PP) enthält mindestens ein blättchenförmiges Effektpigment (P). Ein Effektpigment erzeugt einen optischen Effekt, der vorwiegend auf Lichtreflexion beruht. Pigmente, die nur einen Farbton erzeugen, sind keine Effektpigmente. Unter den blättchenförmigen Effektpigmenten (P) versteht der Fachmann die ihm bekannten Pigmente, die vorzugsweise ein Verhältnis von Dicke zu Durchmesser der Blättchen zwischen 1:50 und 1:500 aufweisen. Beispiele von blättchenförmigen Effektpigmenten (P) sind Metalleffektpigmente, Perlglanzpigmente und Micapigmente (vgl. Römpp Lexikon Lacke und Druckfarben, Georg Thieme Verlag, Stuttgart, New York, 1998, Effektpigmente, Seite 176).

Vorzugsweise ist genau ein blättchenförmiges Effektpigment (P) in der Pigmentpaste (PP) enthalten. Wenn nur ein blättchenförmiges Effektpigment (P) enthalten ist, ergibt sich eine höhere Flexibilität in der Einstellung der Farbtöne. Bei Bedarf können jedoch mehrer blättchenförmige Effektpigmente (P) enthalten sein. Durch die Kombination von Effektpigmenten kann die Einarbeitung erleichtert werden, was ein Vorteil für die spätere Verarbeitung und für die Handhabung beim Verbraucher darstellen kann.

Bei Micapigmenten handelt es sich um übliche und bekannte Effektpigmente mit einem schichtförmigen Aufbau aus einer Schicht aus Glimmer und mindestens einer Metalloxidschicht. Die Micapigmente sind optisch effektgebend und zählen zu den so genannten Perlglanzpigmenten; zusätzlich können sie auch farbgebend sein (vgl. Römpp Lexikon Lacke und Druckfarben, Georg Thieme Verlag, Stuttgart, New York, 1998, Perlglanzpigmente, Perlmuttpigmente, Seite 438). Sie sind übliche und bekannte Handelsprodukte und werden beispielsweise von der Firma Engelhard unter der Marke Mearlin ® oder von der Firma Merck unter der Marke Iriodin ® vertrieben.

Unter den Metalleffektpigmenten werden hier feinteilige, blättchenförmige metallische Pigmente verstanden, wie zum Beispiel Aluminiumpigmente, Goldbronzen, feuergefärbte Bronzen oder Eisenoxid-Aluminium-Pigmente.

Unter Aluminiumpigmenten (Aluminiumbronze, Silberbronze) werden blättchenförmige Metalleffektpigmente verstanden, die aus Hüttenaluminium der Mindestreinheit 99,5% (DIN EN 573-3; 1994-12) bzw. Reinaluminium der Mindestreinheit 99,95% nach dem Hall- bzw. Hametag-Verfahren hergestellt werden Aluminium-Pigmente dienen der Effektgebung (Metalleffekt) z. B. in Automobildecklacken, Hammerschlag-, Chromeffekt- und anderen Effektlacken sowie in Druckfarben. Sie werden aber auch als funktionelle Pigmente in Korrosionsschutz-Beschichtungen (Barrierewirkung), Reflexionslacken und anderen Spezialgebieten eingesetzt. Eine relativ neue Entwicklung sind Effektpigmente, bei denen das Aluminium-Blättchen mit einer dünnen Schicht Eisenoxid überzogen ist (Eisenoxid-Aluminium-Pigmente). Durch Interferenz an dieser Schicht tritt neben dem Metalleffekt ein Farbeffekt auf (vgl. Römpp Lexikon Lacke und Druckfarben, Georg Thieme Verlag, Stuttgart, New York, 1998, S. 24 "Aluminium-Pigmente).

Die blättchenförmigen Effektpigmente (P) sind in der erfindungsgemäßen Pigmentpaste (PP) in einer Menge von 10 bis 30 Gew.-%, insbesondere von 15 bis 25 Gew.-%, jeweils bezogen auf die gesamte Zusammensetzung der Pigmentpaste (PP), enthalten. Vorzugsweise werden als blättchenförmige Effektpigmente (P) Mica- und/oder Metalleffektpigmente eingesetzt, besonders bevorzugt Aluminiumpigmente.

Darüber hinaus kann die erfindungsgemäße Pigmentpaste (PP) noch mindestens ein von den blättchenförmigen Effektpigmenten (P) unterschiedliches Pigment enthalten, das vorzugsweise aus der Gruppe, bestehend aus organischen und anorganischen, farbgebenden, elektrisch leitfähigen, magnetischen, magnetisch abschirmenden, korrosionshemmenden und füllenden Pigmenten, Pigmenten, die mindestens zwei dieser Eigenschaften aufweisen, und Nanopartikeln ausgewählt wird, sofern ein solches zusätzliches Pigment nicht die anwendungstechnischen Eigenschaften der erfindungsgemäßen Pigmentpaste (PP) nachteilig beeinflusst. Vorzugsweise enthält die erfindungsgemäße Pigmentpaste (PP) kein weiteres Pigment.

Die erfindungsgemäße Pigmentpaste (PP) enthält Bindemittel auf Basis von Polyester, Melamin und Celluloseacetobutyrat (CAB). Zu dem Begriff »Bindemittel« wird auf Römpp Lexikon Lacke und Druckfarben, Georg Thieme Verlag, Stuttgart, New York, 1998, »Bindemittel«, Seiten 73 und 74, verwiesen und Bindemittel sind gemäß der DIN EN ISO 4618:2006, Punkt 2.24 der nichtflüchtige Anteil eines Beschichtungsstoffes ohne Pigmente und Füllstoffe. Reibharze dienen dem Anreiben von Pigmenten (Römpp Lexikon Lacke und Druckfarben, Georg Thieme Verlag, Stuttgart, New York, 1998, »Anreiben«, Seite 34) zur Herstellung von Pigmentpasten oder Pigmentpräparationen (vgl. auch Römpp Lexikon Lacke und Druckfarben, Georg Thieme Verlag, Stuttgart, New York, 1998, »Pigmentpräparationen«, Seite 452). Polyester, Melamin und CAB sind Bindemittel, die eine besonders hohe Fähigkeit zur Dispergierung von Pigmenten aufweisen.

Es ist erfindungswesentlich, dass die erfindungsgemäße Pigmentpaste (PP) mindestens eine wachsartige Verbindung (W) enthält.

Im Zusammenhang mit der vorliegenden Erfindung werden unter "Wachs" und unter "wachsartiger Verbindung" alle dem Fachmann bekannten natürlichen und künstlich gewonnenen Wachse und wachsartigen Verbindungen verstanden. Vorzugsweise weisen die Wachse und wachsartigen Verbindungen alle der folgenden Eigenschaften auf:
1. Bei 20°C knetbar, fest bis brüchig hart.
2. Grob- bis feinkristallin, durchscheinend bis opak, jedoch nicht glasartig.
3. Über 40°C ohne Zersetzung schmelzend.
4. Schon wenig oberhalb des Schmelzpunktes niedrigviskos.
5. Stark temperaturabhängig in Konsistenz und Löslichkeit.
6. Unter leichtem Druck polierbar.

Erfüllt ein Stoff mehr als eine dieser Eigenschaften nicht, ist er kein "Wachs" oder keine "wachsartige Verbindung" (vgl. Ullmanns Enzyklopädie der technischen Chemie; 4. neubearbeitete und erweiterte Auflage; Verlag Chemie; Weinheim; Deerfield Beach, Florida; Basel, 1983, Seite 3 und Römpp Chemie Lexikon; 9. erweiterte und neuüberarbeitet Auflage; Thieme Verlag; 1995). Dementsprechend fallen alle "Wachse" auch unter den Begriff "wachsartige Verbindungen". Wachse unterscheiden sich von ähnlichen synthetischen oder natürlichen Produkten, wie Harze, plastische Massen oder Metallseifen, hauptsächlich darin, dass sie in der Regel etwa zwischen 50 und 200°C in den schmelzflüssigen, niederviskosen Zustand übergehen und praktisch frei von aschebildenden Verbindungen sind. Mögliche wachsartige Verbindungen, die auch unter den Begriff der erfindungsgemäßen Verdicker fallen, werden nicht zum Anteil der wachsartigen Verbindungen (W) gezählt, sondern werden zum Anteil der Verdicker gerechnet.

Die wachsartigen Verbindungen (W) können modifiziert und/oder unmodifiziert sein. Geeignet als wachsartige Verbindungen (W) sind alle an sich bekannten und üblichen Wachse, wobei aber bevorzugt synthetische Wachse eingesetzt werden.

Beispiele für natürliche Wachse sind pflanzliche Wachse, wie Carnaubawachs, Candelillawachs, Espartowachs, Guarumawachs, Japanwachs, Korkwachs, Montanwachs, Ouricurywachs, Reiskeimölwachs, Zuckerrohrwachs, tierische Wachse, wie Bienenwachs, Wollwachs, Schellackwachs und Walrat, und Mineralwachse, wie Ceresin und Ozokerit.

Beispiele für chemisch modifizierte Wachse sind Hartwachse, wie hydrierte Jojobawachse, Montanesterwachse und Sasolwachse.

Geeignet sind beispielsweise auch modifizierte und unmodifizierte Polyolefinwachse, wie Polyethylen- und Polypropylenwachse, Polyethylenglykolwachse und Polyamidwachse. Geeignet sind außerdem auch Polyacrylatpolymerisate und Polyacrylatcopolymerisate, die wie Wachs eine ausgeprägte Temperaturabhängigkeit der Löslichkeit in organischen Lösemitteln zeigen.

Bevorzugte Polyethylen- und Polypropylenwachse sind entweder Homo- oder Copolymere mit vorzugsweise 0,5 bis 40 Gew.-% Comonomereinheiten, die sich von gesättigten oder ungesättigten Monocarbonsäuren oder deren Amiden oder Estern herleiten. Beispiele solcher Comonomereinheiten sind u.a. die Reste von Acrylsäure, Methacrylsäure, Maleinsäure, Fumarsäure, Acrylamid, Stearinsäure oder Stearinsäureamid oder Vinylacetat. Die Polyolefinwachse sind im Handel unter vielfältigen Bezeichnungen erhältlich.

Als Polyamidwachse kommen alle üblicherweise in Beschichtungsmitteln eingesetzten Polyamidwachse in Frage. Beispielsweise werden als Polyamidwachse fettsäurehaltige Polyamidwachse eingesetzt, wie Polyamidwachse auf Basis von Dimer- und/oder Trimerfettsäuren und Hexamethylendiamin. Entsprechende Polyamidwachse sind im Handel beispielsweise unter dem Namen Disparlon erhältlich.

Geeignet sind außerdem wachsartige Polysiloxane, wie z.B. Polydimethylsiloxane, Polydiphenylsiloxane oder modifizierte Silikone, z.B. Polyester-, Polyether- und Acrylat-modifizierte Silikone.

Die wachsartige Verbindung (W) wird bevorzugt in einer Menge von 0,1 bis 2,0 Gew.-%, besonders bevorzugt von 0,5 bis 1,5 Gew.-%, jeweils bezogen auf die gesamte Zusammensetzung der Pigmentpaste (PP), eingesetzt. Bevorzugt werden Polyolefinwachse verwendet, besonders bevorzugt Polyethylenwachse.

Bevorzugt haben die wachsartigen Verbindungen (W) ein gewichtsmittleres Molekulargewicht zwischen 300 und 20 000 g/mol, bevorzugt zwischen 1000 und 10 000 g/mol und vorzugsweise ein Tropfpunkt zwischen 70 und 180 °C, bevorzugt zwischen 70 und 130°C. Vorteilhaft besonders an den bevorzugten wachsartigen Verbindungen (W) ist, dass diese zusätzlich zur Verbesserung der thixotropie beitragen, wodurch das Absetzen der blättchenförmigen Effektpigmente (P) verhindert wird. Weiterhin zeigen die wachsartigen Verbindungen (W), besonders die bevorzugten, einen vorteilhaften Effekt auf die Ausrichtung der blättchenförmigen Effektpigmente (P) in der Beschichtung nach der Applikation.

Celluloseacetobutyrat (CAB) ist der Ester der Celluose mit Essigsäure und Buttersäure. CAB kann durch die Veresterung der Cellulose mit den Anhydriden der Essigsäure und der Buttersäure hergesellt werden. Bevorzugt enthält CAB 0,5 bis 2,1 Acetyl- und 2,3 bis 0,6 Butyryl-Gruppen pro Cellulose-Einheit, das entspricht einem Gehalt an gebundener Essigsäure von 8 bis 43 Gew.-% und einem Gehalt an gebundener Buttersäure von 18 bis 59 Gew.-%.

Die eingesetzte Menge an Celluloseacetobutyrat (CAB) in der erfindungsgemäßen Pigmentpaste (PP) ist 0,1 bis 3,0 Gew.-%, vorzugsweise 0,5 bis 2,5 Gew.-%, besonders bevorzugt 1,0 bis 2,0 Gew.-%, jeweils bezogen auf die gesamte Zusammensetzung der Pigmentpaste (PP).

Geeignete Polyesterharze (PE) können gesättigt oder ungesättigt, bevorzugt ungesättigt sein. Ungesättigt in diesem Zusammenhang bedeutet, dass die Polyesterharze nicht vollständig gesättigt sind bzw. mindestens eine Kohlenstoff-Kohlenstoff-Mehrfachbindung im Polyesterharz enthalten ist. Polyesterharze (PE) werden durch die Veresterung von organischen Di- oder Polycarbonsäuren oder ihren Anhydriden mit organischen Di- oder Polyolen hergestellt oder leiten sich von einer Hydroxycarbonsäure oder einem Lacton ab. Je nach Art und Funktionalität der Ausgangsstoffe entstehen lineare, verzweigte oder vernetzte Produkte. Um verzweigte Polyesterharze (PE) herzustellen, können Polyole und/oder Polycarbonsäuren mit einer höheren Wertigkeit als 2 eingesetzt werden. Durch die Verwendung von Diolen mit Dicarbonsäuren können lineare Polyesterharze (PE) hergestellt werden, wobei die eingesetzten Dicarbonsäuren oder Diole lineare oder verzweigte aliphatische, cycloaliphatische oder aromatische Dicarbonsäuren oder Diole sein können.

Die zur Herstellung der Polyester (PE) geeigneten Diole sind beispielsweise Alkylenglykole, wie Ethylenglykol, Propylenglykol, Butylenglykol, 1,4-Butandiol, 1,6-Hexandiol und Neopentylglykol, und anderen Diole, wie Dimethylolcyclohexan. Als Alkohole mit einer höheren Wertigkeit als 2 können Polyole, wie Trimethylolpropan, Glycerin und Pentaerythrit, eingesetzt werden. Die Säurekomponente des Polyesters (PE) wird bevorzugt aus niedermolekularen Dicarbonsäuren oder ihren Anhydriden mit 2 bis 44, bevorzugt 4 bis 36 Kohlenstoffatomen im Molekül ausgewählt. Geeignete Säuren sind beispielsweise o-Phthalsäure, Isophthalsäure, Terephthalsäure, Tetrahydrophthalsäure, Cyclohexandicarbonsäure, Bernsteinsäure, Adipinsäure, Azelainsäure, Sebazinsäure, Maleinsäure, Fumarsäure, Glutarsäure, Hexachlorheptandicarbonsäure, Tetrachlorphthalsäure und/oder dimerisierte Fettsäuren. Anstelle dieser Säuren können auch ihre Anhydride, soweit diese existieren, verwendet werden. Bei der Bildung von Polyesterharzen (PE) können auch Carbonsäuren mit 3 oder mehr Carboxylgruppen, beispielsweise Trimellithsäureanhydrid, verwendet werden.

Es können auch Polyesterharze (PE) eingesetzt werden, die durch Umsetzung eines Lactons mit einem Di- oder Polyol erhalten werden. Sie zeichnen sich durch die Gegenwart von entständigen Hydroxylgruppen und wiederkehrenden Polyesteranteilen der Formel (-CO- (CₙH₂ₙ₋ₓR¹ₓ)-O) aus. Hierbei ist n bevorzugt 4 bis 7, x bevorzugt 1 bis 6 und der Substituent R¹ = Wasserstoff, ein Alkyl-, Cycloalkyl- oder Alkoxy-Rest, wobei R¹ innerhalb einer Gruppe auch unterschiedlich sein kann. Der Substituent R¹ enthält nicht mehr als 12 Kohlenstoffatome und auch die gesamte Anzahl der Kohlenstoffatome in allen Substituenten R¹ übersteigt nicht 12 pro Lactonring. Beispiele hierfür sind Hydroxycapronsäure, Hydroxybuttersäure, Hydroxydecansäure und/oder Hydroxystearinsäure. Für die Herstellung der Polyesterharze (PE), die auf einer Umsetzung von Lactonen basieren, wird das unsubstituierte epsilon-Caprolacton, bei dem n den Wert 4 hat und alle R¹-Substituenten Wasserstoff sind, bevorzugt. Die Umsetzung von Lactonen kann durch niedermolekulare Polyole, wie Ethylenglykol, 1,3-Propandiol, 1,4-Butandiol oder Dimethylolcyclohexan, gestartet werden. Es können jedoch auch andere Reaktionskomponenten, wie Ethylendiamin, Alkyldialkanolamine oder auch Harnstoff mit Caprolacton umgesetzt werden. Als höhermolekulare Diole eignen sich auch Polylactamdiole, die durch Reaktion von beispielsweise epsilon-Caprolactam mit niedermolekularen Diolen hergestellt werden.

Die eingesetzte Menge des Polyesterharzes (PE) in der erfindungsgemäßen Pigmentpaste (PP) ist 2,0 bis 20 Gew.-%, vorzugsweise 5,0 bis 15 Gew.-%, jeweils bezogen auf die gesamte Zusammensetzung der Pigmentpaste (PP).

Vorzugsweise hat das Polyesterharz (PE) ein gewichtsmittleres Molekulargewicht von 2000 bis 20000 g/mol, bevorzugt 2000 bis 10000 g/mol. Bevorzugt weisen die Polyesterharze (PE) eine Säurezahl von 3 bis 50 mgKOH/g, besonders bevorzugt von 3 bis 30 mgKOH/g auf und haben vorzugsweise eine Hydroxylzahl von 30 bis 500 mg KOH/g.

In den Pigmentpasten (PP) ist mindestens ein Melaminharz enthalten. Melaminharze sind Polykondensationsharze aus Melamin (1,3,5-Triazin-2,4,6-triamin) und maximal 6 Mol Formaldehyd pro Mol Melamin. Die resultierenden Methylolgruppen können ganz oder teilweise mit einem oder verschiedenen Alkoholen verethert sein. Melaminharze können unterschiedliche Methylolierungsgrade und unterschiedliche Veretherungsgrade aufweisen.

Der Methylolierungsgrad eines Melaminharzes beschreibt, wie viele der möglichen Methylolierungsstellen des Melamins methyloliert sind, d.h. wie viele der insgesamt sechs Wasserstoffatome der primären Aminogruppen des Melamins (d.h. des 1,3,5-Triazin-2,4,6-triamins) durch eine Methylolgruppe ersetzt sind. Ein vollständig methyloliertes, einkerniges Melaminharz weist demzufolge sechs Methylolgruppen pro Triazinring auf, wie beispielsweise Hexamethylolmelamin. Die Methylolgruppen können unabhängig voneinander auch verethert vorliegen.

Unter dem Veretherungsgrad eines Melaminharzes wird der Anteil an Methylolgruppen des Melaminharzes verstanden, der mit einem Alkohol verethert wurde. Bei einem vollständig veretherten Melaminharz sind alle vorhandenen Methylolgruppen nicht frei, sondern mit einem Alkohol verethert. Zur Veretherung sind ein- oder mehrwertige Alkohole geeignet.

Melaminharze können monomer (einkernig) oder oligomer (mehrkernig) vorliegen. Die Angabe "einkernig" bzw. "mehrkernig" bezieht sich auf die Anzahl der Triazinringe pro Molekül Melaminharz. Ein Beispiel für ein einkerniges, vollständig methyloliertes und vollständig mit Butanol verethertes Melaminharz ist Hexamethoxybutylmelamin.

Vorteilhaft sind Butanol-veretherten Melaminharze, bei denen Butanol zur Veretherung eingesetzt wird. Dabei können Butanol-Gemische oder die einzelnen Butanole in Reinform eingesetzt werden, bevorzugt werden n-Butanol und/oder iso-Butanol eingesetzt, ganz bevorzugt wird iso-Butanol (2-Methylpropanol) eingesetzt.

Bevorzugte Melaminharze sind high-Imino Melaminharz, die eine unvollständige Methylolierung aufweisen. Vorzugsweise ist dabei das Formaldehyd-Einbaumolverhältnis weniger als 1 : 5,5, d.h., dass ein Mol Melamin mit weniger als 5,5 Mol Formaldehyd umgesetzt wird. Somit enthält das high-Imino Melaminharz freie NH-Gruppen, vorzugsweise mehr als 0,5 NH-Gruppen pro Molekül. Zusätzlich zu den freien NH-Gruppen weisen high-Imino Melaminharze einen hohen Veretherungsgrad auf, der vorzugsweise größer als 80 % ist.

Die besonders bevorzugten high-Imino Butanol-veretherten Melaminharze haben vorzugsweise ein Einbaumolverhältnis Melamin : Formaldehyd : Butanol von 1 : 3 bis 5,5 : 3 bis 5,5, wobei der Veretherungsgrad vorzugsweise größer als 80 % ist, bevorzugt größer als 90 %, ganz bevorzugt größer als 99 %. Besonders bevorzugt werden high-Imino Butanol-veretherte Melaminharze mit einem Einbaumolverhältnis Melamin : Formaldehyd : Butanol von 1 : 3,5 bis 4,5 : 3,5 bis 4,5 eingesetzt, wobei der Veretherungsgrad vorzugsweise größer als 80 % ist, bevorzugt größer als 90 %, ganz bevorzugt größer als 99 %.

Das Melaminharz ist zu 2,0 bis 10 Gew.-%, bevorzugt 4,0 bis 7,0 Gew.-%, jeweils bezogen auf die gesamte Zusammensetzung der Pigmentpaste (PP), in der Pigmentpaste (PP) enthalten. Bevorzugt wird als Melaminharz ein high-Imino Butanol-verethertes Melaminharz eingesetzt.

Die erfindungsgemäße Pigmentpaste (PP) enthält 0,05 bis 0,5 Gew.-%, insbesondere 0,1 bis 0,3 Gew.-%, bezogen auf die gesamte Zusammensetzung der Pigmentpaste (PP), eines Verdickers auf Harnstoffbasis.

Die Wirkung eines Verdickers auf Basis von modifiziertem Harnstoff beruht darauf, dass er in den üblichen Lacklösemitteln unlöslich ist. Beim Einbringen in das Lacksystem fällt das Additiv kontrolliert unter Bildung sehr feiner nadelförmiger Kristalle aus, die dann eine dreidimensionale Netzstruktur aufbauen. Der erstmalige Aufbau dieser Struktur kann mehrere Stunden dauern. Bei der Applikation eines solchen Lackmaterials werden die Netzstrukturen bereits durch geringe Scherkräfte zerstört und das Material zeigt eine (gewünschte) niedrige Applikationsviskosität. Der Wiederaufbau der Struktur nach der Applikation erfolgt sehr schnell und führt zu einem raschen Anstieg der Viskosität im applizierten Lackfilm.

Vorzugsweise wird als Verdicker ein Polyurethan-modifizierter Harnstoff verwendet, besonders bevorzugt ein Reaktionsprodukt aus Toluol-2,4-diisocyanat (TDI) mit Xylylendiamin sowie Triethylenglykol- und/oder Tetraethylenglykolmonobutylether. Der Verdicker hat vorzugsweise ein gewichtsmittleres Molekulargewicht von 1000 bis 20000 g/mol und bevorzugt eine OH-Zahl und Säurezahl von kleiner 50 mg KOH/g, besonders bevorzugt von kleiner 10 mgKOH/g. Entsprechende Verdicker sind beispielsweise als Byk-410 (handelsübliches Produkt der Firma Byk Chemie) erhältlich.

Neben den erfindungsgemäßen Verdickern können auch weitere Verdicker in der Zusammensetzung enthalten sein, wie beispielsweise auch die oben beschriebenen wachsartigen Verbindungen als Verdicker geeignete sein können. Jedoch werden allen Verbindungen gemäß der Definition der erfindungsgemäßen Verdicker zum Anteil der erfindungsgemäßen Verdicker gerechnet und nicht zu anderen Anteilen, wie beispielsweise dem Anteil der wachsartigen Verbindungen.

Als organische Lösemittel geeignet sind alle üblicherweise in der Lackindustrie eingesetzten organischen Lösemittel, beispielsweise Alkohole, Glykolether, Ester, Etherester und Ketone, aliphatische und/oder aromatische Kohlenwasserstoffe, wie beispielsweise Aceton, Methylisobutylketon, Methylethylketon, Butylacetat, 3-Butoxy-2-propanol, Ethylethoxypropionat, Butylglykol, Butylglykolacetat, Butanol, Dipropylenglykolmethylether, Glykolsäurebutylester, Xylol, Toluol, Shellsol® T, Pine Oel 90/95, Solventnaphtha®, Shellsol® A, Solvesso, Benzin 135/180 und ähnliche.

Der Gehalt an organischen Lösemitteln in der erfindungsgemäßen Pigmentpaste (PP) beträgt 30 bis 80 Gew.-%, bevorzugt 40 bis 70 Gew.-%, jeweils bezogen auf die gesamte Zusammensetzung der Pigmentpaste (PP).

Vorzugsweise wird neben anderen Lösemitteln Butylacetat als Lösemittel eingesetzt und ist bevorzugt in einer Menge von mindestens 10 Gew.-%, bezogen auf die gesamte Zusammensetzung der Pigmentpaste (PP), in der Pigmentpaste (PP) enthalten.

Vorzugsweise ist die erfindungsgemäße Pigmentpaste (PP) frei von Wasser. Dies bedeutet, dass die erfindungsgemäße Pigmentpaste (PP) nur so geringe Mengen an Wasser enthält, dass die anwendungstechnischen Eigenschaften der erfindungsgemäßen Pigmentpaste (PP) hierdurch nicht geprägt, insbesondere nicht nachteilig beeinflusst werden. Vorzugsweise liegt der Gehalt an Wasser unter 5 Gew.-%, bezogen auf die gesamte Zusammensetzung der Pigmentpaste (PP), und bevorzugt unter 1 Gew.-% und besonderes bevorzugt unterhalb der Nachweisgrenze von Wasser.

Darüber hinaus kann die erfindungsgemäße Pigmentpaste (PP) noch übliche und bekannte Zusatzstoffe, wie lackübliche Additive, enthalten. Es ist indes ein besonderer Vorteil der erfindungsgemäßen Pigmentpaste (PP), dass sie keine weiteren Zusatzstoffe enthalten muss, um die erfindungsgemäßen Vorteile zu erzielen.

Die Herstellung der erfindungsgemäßen Pigmentpaste (PP) erfordert keine methodischen Besonderheiten, sondern erfolgt nach den üblichen und bekannten Methoden der Herstellung von Pigmentpasten oder Pigmentzubereitungen durch Vermischen der vorstehend beschriebenen Bestandteile in geeigneten Mischaggregaten wie Rührkessel, Dissolver, Ultraturrax, In-line-Dissolver, Rührwerksmühlen, Perlmühlen oder Extruder. Dabei kann der Fachmann anhand seines allgemeinen Fachwissens die Verfahren und Vorrichtungen so auswählen, dass die jeweils zu dispergierenden Metallpigmente (P) nicht geschädigt werden.

Erfindungsgemäß wird die erfindungsgemäße Pigmentpaste (PP) für die Herstellung effektgebender oder farb- und effektgebender, lösemittelhaltiger Beschichtungsstoffe (B), bevorzugt lösemittelhaltiger Basislacke (BL), verwendet.

Die resultierenden lösemittelhaltigen Beschichtungsstoffe (B), insbesondere die lösemittelhaltigen Basislacke (BL), können physikalisch, thermisch selbst- und/oder fremdvernetzend, mit aktinischer Strahlung oder thermisch und mit aktinischer Strahlung härtbar sein. Unter aktinischer Strahlung ist nahes Infrarot (NIR), sichtbares Licht oder UV-Strahlung, insbesondere UV-Strahlung zu verstehen. Die gemeinsame thermische Härtung und Härtung mit aktinischer Strahlung wird von der Fachwelt auch als Dual-Cure bezeichnet.

Vorzugsweise werden die lösemittelhaltigen Basislacke (BL) für die Herstellung von effektgebenden oder farb- und effektgebenden Mehrschichtlackierungen auf grundierten und ungrundierten Substraten eingesetzt.

Als Substrate für die Beschichtungsstoffe (B), insbesondere für die Basislacken (BL) kommen alle zu lackierenden Oberflächen, die durch eine Härtung der hierauf befindlichen Lackierungen unter Anwendung von Hitze oder Hitze und aktinischer Strahlung nicht geschädigt werden, in Betracht. Geeignete Substrate bestehen beispielsweise aus Metallen, Kunststoffen, Holz, Keramik, Faserverbunden, Glas sowie Verbunden dieser Materialien. Die Oberflächen dieser Materialien können bereits vorlackiert oder vorbeschichtet sein.

Demgemäß sind die lösemittelhaltigen Beschichtungsstoffe (B), insbesondere die lösemittelhaltigen Basislacke (BL) für das Lackieren von Kraftfahrzeugkarosserien und Teilen hiervon, Kraftfahrzeugen im Innen- und Außenbereich, Bauwerken im Innen- und Außenbereich, Türen, Fenstern und Möbeln sowie im Rahmen der industriellen Lackierung für das Lackieren von Kunststoffteilen, insbesondere transparenten Kunststoffteilen, Kleinteilen, Coils, Container, Emballagen, elektrotechnischen Bauteilen und weißer Ware sowie für das Beschichten von Hohlglasartikeln besonders gut geeignet.

Ganz besonders gut geeignet sind die lösemittelhaltigen Beschichtungsstoffe (B), insbesondere die lösemittelhaltigen Basislacke (BL) für die Originallackierung (OEM) und Reparaturlackierung von Kraftfahrzeugen, insbesondere von PKW.

Im Falle elektrisch leitfähiger Substrate können Grundierungen verwendet werden, die in üblicher und bekannter Weise aus Elektrotauchlacken (ETL) hergestellt werden. Hierfür kommen sowohl anodische (ATL) als auch kathodische (KTL) Elektrotauchlacke, insbesondere aber KTL, in Betracht.

Mit der erfindungsgemäßen Beschichtung können auch grundierte oder nicht grundierte Kunststoffe wie z.B. ABS, AMMA, ASA, CA, CAB, EP, UF, CF, MF, MPF, PF, PAN, PA, PE, HDPE, LDPE, LLDPE, UHMWPE, PET, PMMA, PP, PS, SB, PUR, PVC, RF, SAN, PBT, PPE, POM, PUR-RIM, SMC, BMC, PP-EPDM und UP (Kurzbezeichnungen nach DIN 7728T1) sowie deren Polymerblends oder die mit diesen Kunststoffen hergestellten faserverstärkten Kompositmaterialien lackiert werden.

Im Falle von nicht funktionalisierten und/oder unpolaren Substratoberflächen können diese vor der Beschichtung in bekannter Weise einer Vorbehandlung, wie einer Vorbehandlung mit einem Plasma oder einer Beflammung, unterzogen oder mit einer Hydrogrundierung versehen werden.

Die Mehrschichtlackierungen können in unterschiedlicher Weise hergestellt werden. Bevorzugt werden die in der deutschen Patentanmeldung DE 199 30 664 A1, Seite 15, Zeilen 36 bis 58, oder in der deutschen Patentanmeldung DE 199 14 896 A1, Spalte 2, Zeile 15, bis Spalte 3, Zeile 24, und Spalte 16, Zeile 54, bis Spalte 18, Zeile 54, beschriebenen Nass-in-nass-Verfahren eingesetzt.

Aufgrund der hervorragenden Verteilung der Metallpigmente (P) in der erfindungsgemäßen Pigmentpaste (PP) und ihrer Lagerstabilität resultieren letztlich Mehrschichtlackierungen von hervorragender Farbtonstabilität und Stabilität der optischen Effekte. Die Mehrschichtlackierungen können daher mit Vorteil für die Originallackierung und Reparaturlackierung von PKW der Oberklasse verwendet werden. Vorteilhafterweise enthalten die erfindungsgemäßen Beschichtungsstoffe (B), bezogen auf die gesamte Zusammensetzung des Beschichtungsstoffes, zwischen 0,25 und 30 Gew.-% der erfindungsgemäßen Pigmentpaste (PP).

Der Festkörpergehalt wurde bestimmt, indem die Probe (2 g) für 1 Stunde bei 125°C gelagert wurde. Die übrigbleibende Menge entspricht dem Festkörpergehalt an der eingewogenen Probe. Falls der Festkörpergehalt davon abweichend bestimmt wurde, werden Zeit und Temperatur entsprechend angegeben, beispielsweise in Klammern.

Der Tropfpunkt wird gemäß der DIN 51801 (Tropfpunktbestimmung nach Ubbelohde; ASTM D-3954) bestimmt. Der Schmelzpunkt kann mittels DSC nach DIN 51007 bestimmt werden.

Die Säurezahl (SZ) wird nach DIN 53402 und die OH-Zahl (Hydroxylzahl) nach DIN 53240 bestimmt.

Die Bestimmung der zahlen- und gewichtsmittleren Molekulargewichte erfolgt mittels GPC-Analyse mit THF (+0,1% Essigsäure) als Eluent (1 ml/min) auf einer Styrol-Divinylbenzol-Säulenkombination. Die Kalibrierung wird mit Polystyrol-Standards durchgeführt.

### Beispiele

### Herstellung einer Wachsdispersion (W)

6,0 Gew.-Teile des Polyethylenwachses Luwax^{®} EVA 1 Granulat der BASF AG (handelsübliches Polyethylenwachs auf Basis von Ethylen/Vinylacetat-Copolymeren mit einem Schmelzpunkt von 87-92 °C, einem Tropfpunkt nach Ubbelohde von ca. 95°C und einem gewichtsmittleren Molekulargewicht von ca. 6500 g/mol) und 40,0 Gew.-Teile Xylol werden unter langsamem Rühren bei 100°C gelöst. Unter weiterem Rühren lässt man die Lösung auf 70°C abkühlen und gibt langsam 54,0 Gew-Teile Butylacetat (technisch, ca. 85%ig) zu, wobei eine erwünschte Wachsfällung beginnt. Unter weiterem Rühren lässt man die Dispersion weiter bis auf 35°C abkühlen.

### Herstellung einer CAB-Lösung (C)

In einer Vorlage werden 76,0 Gew.-Teile Butylacetat mit 24,0 Gew.-Teile CAB 381-2 BP (handelsübliches Celluloseacetobutyrat der Firma Eastman) für 30 min gemischt.

### Herstellung eines Polyesters (PE-1)

Eine Mischung aus 20,2 Gew.-Teilen Neopentylglykol, 22,8 Gew.-Teilen Isophthalsäure, 10,0 Gew.-Teilen Adipinsäure, 6,1 Gew.-Teilen Trimethylolpropan, 3,4 Gew.-Teilen Phthalsäureanhydrid und 0,05 Gew.-Teilen Dibutylzinnoxid werden in einem mit einem Wasserabscheider ausgestatteten Rührkessel vorgelegt und unter Stickstoffatmosphäre unter Rühren auf 200 °C erhitzt. Das dabei freigesetzte Wasser wird im Wasserabscheider aufgefangen. Die Reaktionsmischung wird so lange bei 200 °C gehalten, bis die Säurezahl einen Wert von 18 mg KOH/g unterschreitet. Nach Abkühlung unter 100°C wird der Festkörpergehalt durch Zugabe von Xylol auf 60% eingestellt.

Das so erhaltene Polyesterharz (PE-1) weist eine Säurezahl von 10 mg KOH/g und eine Hydroxylzahl von 80 mg KOH/g, jeweils bezogen auf den Festkörper, auf. Das gewichtsmittlere Molekulargewicht beträgt 2 700 g/mol.

### Herstellung eines lösemittelhaltigen Mischlackes (ML)

Der Mischlack (ML) wird durch Vermischen und Homogenisieren der folgenden Bestandteile hergestellt:

| | |
|---|---|
| 30,0 Gew.-Teile | der hergestellten Wachsdispersion (W), |
| 10,0 Gew.-Teile | der hergestellten CAB-Lösung (C), |
| 30,0 Gew.-Teile | des hergestellten Polyester-Bindemittels (PE-1), |
| 20,0 Gew.-Teile | Maprenal MF650 (ein Butanol-verethertes high-Imino Melaminharz; handelsübliches Produkt der Firma Ineos Melamines GmbH), |
| 0,5 Gew.-Teile | Byk-410 (ein lösemittelhaltiger Verdicker auf Harnstoffbasis; handelsübliches Produkt der Firma Byk Chemie), |
| 2,0 Gew.-Teile | n-Butanol, |
| 4,0 Gew.-Teile | Butylglykolacetat und |
| 3,5 Gew.-Teile | Butylacetat. |

### Herstellung einer erfindungsgemäßen lösemittelhaltigen Aluminium-Pigmentpaste (PP-1)

Die erfindungsgemäße lösemittelhaltige Aluminium-Pigmentpaste (PP-1) wird durch Vermischen und Homogenisieren der folgenden Bestandteile hergestellt:

| | |
|---|---|
| 25,0 Gew.-Teile | Butylacetat, |
| 25,0 Gew.-Teile | Metallux 2192 (eine non-leafing Aluminiumeffektpigmentpaste vom Silberdollar-Typ mit einer mittleren Teilchengröße von 14 µm; handelsübliches Produkt der Firma Eckart) und |
| 50,0 Gew.-Teile | des hergestellten lösemittelhaltigen Mischlackes (ML). |

### Herstellung einer erfindungsgemäßen lösemittelhaltigen Mica-Pigmentpaste (PP-2)

Die erfindungsgemäße lösemittelhaltige Mica-Pigmentpaste (PP-2) wird durch Vermischen und Homogenisieren der folgenden Bestandteile hergestellt:

| | |
|---|---|
| 25,0 Gew.-Teile | Iriodin 9225 SQB Rutil Perlblau SW (ein beschichtetes Titandioxid-Mica-Effektpigment; handelsübliches Produkt der Firma Merck KGaA) und |
| 75,0 Gew.-Teile | des hergestellten lösemittelhaltigen Mischlackes (ML). |

### Herstellung einer nicht-erfindungsgemäßen lösemittelhaltigen Aluminium-Pigmentpaste (PP-3)

Die nicht-erfindungsgemäße lösemittelhaltige Aluminium-Pigmentpaste (PP-3) wird durch Vermischen und Homogenisieren der folgenden Bestandteile hergestellt:

| | |
|---|---|
| 75,0 Gew.-Teile | Butylacetat, |
| 25,0 Gew.-Teile | Metallux 2192 (eine non-leafing Aluminiumeffektpigmentpaste vom Silberdollar-Typ mit einer mittleren Teilchengröße von 14 µm; handelsübliches Produkt der Firma Eckart. |

### Herstellung einer nicht-erfindungsgemäßen lösemittelhaltigen Mica-Pigmentpaste (PP-4)

Die nicht-erfindungsgemäße lösemittelhaltige Mica-Pigmentpaste (PP-4) wird durch Vermischen und Homogenisieren der folgenden Bestandteile hergestellt:

| | |
|---|---|
| 25,0 Gew.-Teile | Iriodin 9225 SQB Rutil Perlblau SW (ein beschichtetes Titandioxid-Mica-Effektpigment; handelsübliches Produkt der Merck KGaA) und |
| 75,0 Gew.-Teile | Butylacetat. |

Die Pigmentpasten (PP-1) und (PP-2) waren nach 6 Monate noch gut verarbeitbar. Durch leichtes Aufrühren wurde eine homogene Mischung erreicht und die Einarbeitung in Lack war ohne Stippen/Agglomerate. Die Vergleichsversuche (PP-3) und (PP-4) haben schon nach wenigen Tagen stark abgesetzt, ließen sich kaum aufrühren und verursachten Stippen in den resultierenden Beschichtungen.

### Herstellung eines Acrylatbindemittels (BM1)

In einem Reaktor werden 13,239 Gew.-Teile Solvesso 100 vorgelegt und auf 167 °C erhitzt. Der Reaktor wird unter einen Druck von 0,35 bar (5 psi) gesetzt und über einen Zeitraum von 4 h simultan mit einer Monomermischung bestehend aus 2,149 Gew.-Teilen Acrylsäure, 10,765 Gew.-Teilen Hydroxyethylacrylat, 11,484 Gew.-Teilen 2-Ethylhexylacrylat, 11,484 Gew.-Teilen Butylacrylat und 14,353 Gew.-Teilen Styrol und einer Initiatormischung bestehend aus 0,719 Gew.-Teilen Di-tert-butylperoxid und 11,120 Gew.-Teilen einer Lösung von Dicumylperoxid in Solvesso 100 (50%-ig), versetzt. Nach 1 h bei der oben genannter Temperatur und dem oben genannten Druck wird über einen Zeitraum von 1 h 21,530 Gew.-Teile epsilon-Caprolacton zugegeben. Es wird auf 150 °C abgekühlt und 1,5 h bei einem Druck von 0,35 bar (5 psi) gehalten. Das Reaktionsgemisch wird abgekühlt und mit Solvesso 100 auf einen Festkörpergehalt von 75 Gew.-% eingestellt. Das so erhaltene Acrylatharz weist eine Säurezahl von 23 mgKOH/g und eine OH-Zahl von 73 mgKOH/g, jeweils bezogen auf den Festkörper, auf.

### Herstellung eines Trägerharzes (TH1)

In einem Reaktor werden 5,762 Gew.-Teile Xylol, 5,762 Gew.-Teile Toluol, 0,179 Gew.-Teile Methansulfonsäure vorgelegt und auf 104 °C erhitzt. Anschließend werden 80,615 Gew.-Teile 12-Hydroxystearinsäure dem Reaktor zugefahren und bei 171 °C im Rückfluss unter Entzug des Reaktionswassers gekocht. Die Reaktion wird bei Erreichung einer Säurezahl von 35 mgKOH/g beendet. Nach Abkühlen wird der Festkörpergehalt mit Solventnaphtha auf 80 Gew.-% eingestellt.

### Herstellung von Polymermikroteilchen (M)

In einem Reaktor werden 43,16 Gew.-Teile Solventnaphtha, 0,08 Gew.-Teile N,N-Dimethylcocosamin und 1,00 Gew.-Teile Ethylacetat vorgelegt und auf 104 °C erhitzt. Der Reaktor wird unter einen Druck von 0,69 bar (10 psi) gesetzt und innerhalb von 2 h simultan mit einer Monomermischung bestehend aus 27,63 Gew.-Teilen Methylmethacrylat, 3,85 Gew.-Teilen 2-Hydroxypropylmethacrylat, 0,83 Gew.-Teilen Glycidylmethacrylat, 12,81 Gew.-Teilen des hergestellten Trägerharzes (TH1), 51 Gew.-Teilen Methacrylsäure und 1,52 Gew.-Teilen Octylmercaptan und einer Initiatormischung bestehend aus 2,28 Gew.-Teilen tert.-Butylperoxy-2-ethylhexanoat und 5,13 Gew.-Teilen Solventnaphtha versetzt. Nach 3 h bei der oben genannten Temperatur und dem oben genannten Druck wird das Reaktionsgemisch abgekühlt und mit Solventnaphtha auf einen Festkörpergehalt von 41 Gew.-% eingestellt. Die so erhaltenen Polymermikroteilchen weisen eine Säurezahl von 10 mgKOH/g und eine OH-Zahl von 48 mgKOH/g, jeweils bezogen auf den Festkörper, auf.

### Herstellung der stabilisierten anorganischen Teilchen (N)

In einer Vorlage werden 10,00 Gew.-Teile des hergestellten Acrylatbindemittels (BM1), 6,00 Gew.-Teile Degussa Aerosil^{(R)} 380 (handelsübliche hydrophile pyrogene Kieselsäure der Firma Degussa AG mit einer spezifischen Oberfläche (BET) von 380 m²/g, einer mittleren Größe der Primärteilchen von 7 nm und einem SiO2-Gehalt von >= 99,8 Gew.- %, bezogen auf die geglühte Substanz), 41,7 Gew.-Teile Solventnaphta, 41,7 Gew.-Teile Butylacetat und 0,6 Gew.-Teile eines Fettsäureesters als Stabilisierungsmittel gemischt und dispergiert. Der eingesetzte Fettsäureester hat einen nichtflüchtigen Anteil von 96,2 Gew.-% bei 130 °C für 2h, eine OH-Zahl von 50 mgKOH/g und eine Säurezahl von 17,2 mgKOH/g, jeweils bezogen auf den [130 °C/2 h]-Festkörpergehalt, enthaltend 6-Hydroxycapronsäure, Hydroxyvaleriansäure, Laurinsäure und Polyethylenglykol (beispielsweise das handelsübliche Benetzungsadditiv auf Basis von Fettsäureestern Solsperse^{(R)} 39000 der Firma Th. Goldschmidt)

### Herstellung eines lösemittelhaltigen Basislackes (BL-1)

Der lösemittelhaltige Basislack (BL-1) wird durch Vermischen und Homogenisieren der folgenden Bestandteile hergestellt:

| | |
|---|---|
| 10,0 Gew.-Teile | der hergestellten Wachsdispersion (W), |
| 22,0 Gew.-Teile | der hergestellten Polymermikroteilchen (M), |
| 11,5 Gew.-Teile | Resimene TM 755 (ein monomeres Hexamethoxy-methyl/butyl-Melaminharz; handelsübliches Produkt der Firma Ineos Melamines), |
| 8,0 Gew.-Teile | der hergestellten stabilisierten anorganischen Teilchen (N), |
| 0,5 Gew.-Teile | Additol XL 480 (ein Benetzungsadditiv auf Basis eines aminharzmodifizierten Acrylcopolymers ohne Siliconzusätze; handelsübliches Produkt der Firma Cytec Surface Specialties), |
| 0,8 Gew.-Teile | TinuvinTM 384-2 (ein UV-Absorber; handelsübliches Produkt der Firma Ciba Specialty Chemicals, Inc.), |
| 16,0 Gew.-Teile | des hergestellten Bindemittels (BM1), |
| 1,8 Gew.-Teile | Nacure® 5225 (Amin-blockierte Dodecylbenzensulfonsäure, DDBSA-Katalysator; handelsübliches Produkt der Firma King Industries, Inc.), |
| 3,0 Gew.-Teile | der hergestellten CAB-Lösung (C), |
| 15,0 Gew.-Teile | der hergestellten erfindungsgemäßen lösemittelhaltigen Alumium-Pigmentpaste (PP-1), |
| 6,0 Gew.-Teile | der hergestellten erfindungsgemäßen lösemittelhaltigen Mica-Pigmentpaste (PP-2) und |
| 5,4 Gew.-Teile | Butylacetat. |

Der lösemittelhaltige Basislack (BL-1) wird durch weitere Zugabe von 3,0 Gew.-Teilen Butylacetat auf eine Spritzviskosität von 22 sec im Ford Cup 3-Auslaufbecher (23°C) eingestellt. Danach wies der lösemittelhaltige Basislack (BL-1) einen Festkörpergehalt von 41,0 Gew.-% auf.

### Herstellung eines lösemittelhaltigen Basislackes (BL-2)

Der lösemittelhaltige Basislack (BL-2) wird durch Vermischen und Homogenisieren der folgenden Bestandteile hergestellt:

| | |
|---|---|
| 10,0 Gew.-Teile | der hergestellten Wachsdispersion (W), |
| 22,0 Gew.-Teile | der hergestellten Polymermikroteilchen (M), |
| 11,5 Gew.-Teile | Resimene TM 755 (ein monomeres Hexamethoxy-methyl/butyl-Melaminharz; handelsübliches Produkt der Firma Ineos Melamines), |
| 8,0 Gew.-Teile | der hergestellten stabilisierten anorganischen Teilchen (N), |
| 0,5 Gew.-Teile | Additol XL 480 (ein Benetzungsadditiv auf Basis eines aminharzmodifizierten Acrylcopolymers ohne Siliconzusätze; handelsübliches Produkt der Firma Cytec Surface Specialities), |
| 0,8 Gew.-Teile | TinuvinTM 384-2 (ein UV-Absorber; handelsübliches Produkt der Firma Ciba Specialties Chemicals, Inc.), |
| 16,0 Gew.-Teile | des hergestellten Bindemittels (BM1), |
| 1,8 Gew.-Teile | Nacure® 5225 (Amin-blockierte Dodecylbenzensulfonsäure, DDBSA-Katalysator; handelsübliches Produkt der Firma King Industries, Inc.), |
| 3,0 Gew.-Teile | der hergestellten CAB-Lösung (C), |
| 15,0 Gew.-Teile | der hergestellten nicht erfindungsgemäßen lösemittelhaltigen Alumium-Pigmentpaste (PP-3), |
| 6,0 Gew.-Teile | der hergestellten nicht-erfindungsgemäßen lösemittelhaltigen Mica-Pigmentpaste (PP-4) und |
| 5,4 Gew.-Teile | Butylacetat. |

Der lösemittelhaltige Basislack (BL-2) wird durch weitere Zugabe von 3,0 Gew.-Teilen Butylacetat auf eine Spritzviskosität von 22 sec im Ford Cup 3-Auslaufbecher (23°C) eingestellt. Danach wies der lösemittelhaltige Basislack (BL-2) einen Festkörpergehalt von 41,0 Gew.-% auf.

Nach Herstellung der erfindungsgemäßen lösemittelhaltigen Pigmentpasten (PP-1) und (PP-2) bzw. nicht-erfindungsgemäßen lösemittelhaltigen Pigmentpasten (PP-3) und (PP-4) werden diese für 5 Tage bei 25°C gelagert und anschließend zur Herstellung der lösemittelhaltigen Basislacke (BL-1) bzw. (BL-2) eingesetzt.

Die Anfertigung zweier Stippenfolien aus den lösemittelhaltigen Basislacken (BL-1) und (BL-2) durch pneumatische Applikation auf eine Polyethylen-Folie und Trocknen der beschichteten Folie für 10 min bei 80°C in einem Umluftofen, zeigt eine deutliche Stippenbildung bei Einsatz des lösemittelhaltigen Basislacken (BL-2). Im Gegensatz dazu erzeugt der lösemittelhaltige Basislack (BL-1) keine Stippen.

Ursache dafür ist die Agglomeration der Effektpigmente in den nicht-erfindungsgemäßen lösemittelhaltigen Pigmentpasten (PP-3) und (PP-4), welche bereits nach kurzeitiger Lagerung eintritt. Bei den erfindungsgemäßen lösemittelhaltigen Pigmentpasten (PP-1) und (PP-2) findet keine Agglomeration der Effektteilchen nach Lagerung statt, wodurch nach Einarbeitung der erfindungsgemäßen lösemittelhaltigen Pigmentpasten (PP-1) und (PP-2) in den lösemittelhaltigen Basislack (BL-1) keine Stippen sichtbar sind.

## Patentansprüche

1. Effektpigmente enthaltende, lösemittelhaltige Pigmentpaste (PP), **dadurch gekennzeichnet, dass** sie, jeweils bezogen auf die gesamte Zusammensetzung der Pigmentpaste (PP),
(A) 10 bis 30 Gew.-% mindestens eines blättchenförmigen Effektpigments (P),
(B) 0,1 bis 2,0 Gew.-% einer wachsartigen Verbindung (W),
(C) 0,1 bis 3,0 Gew.-% von Celluloseacetobutyrat (CAB),
(D) 2,0 bis 20 Gew.-% eines Polyesterharzes (PE),
(E) 2,0 bis 10 Gew.-% eines Melaminharzes,
(F) 0,05 bis 0,5 Gew.-% eines Verdickers auf Harnstoffbasis,
(G) 30 bis 80 Gew.-% von organischen Lösemitteln
enthält.

2. Effektpigmente enthaltende, lösemittelhaltige Pigmentpaste (PP) nach Anspruch 1, **dadurch gekennzeichnet, dass** als blättchenförmiges Effektpigment ein Mica- und/oder Metalleffektpigment enthalten ist.

3. Effektpigmente enthaltende, lösemittelhaltige Pigmentpaste (PP) nach Anspruch 1 und 2, **dadurch gekennzeichnet, dass** 15 bis 25 Gew.-% eines blättchenförmigen Effektpigments (P) enthalten ist.

4. Effektpigmente enthaltende, lösemittelhaltige Pigmentpaste (PP) nach einem der Ansprüche 1 bis 3, **dadurch gekennzeichnet, dass** 0,5 bis 1,5 Gew.-% einer wachsartigen Verbindung (W) enthalten ist.

5. Effektpigmente enthaltende, lösemittelhaltige Pigmentpaste (PP) nach einem der Ansprüche 1 bis 4, **dadurch gekennzeichnet, dass** die wachsartige Verbindung (W) ein Polyolefinwachs ist.

6. Effektpigmente enthaltende, lösemittelhaltige Pigmentpaste (PP) nach einem der Ansprüche 1 bis 5, **dadurch gekennzeichnet, dass** 0,5 bis 2,5 Gew.-% von Celluloseacetobutyrat (CAB) enthalten ist.

7. Effektpigmente enthaltende, lösemittelhaltige Pigmentpaste (PP) nach einem der Ansprüche 1 bis 6, **dadurch gekennzeichnet, dass** 5,0 bis 15 Gew.-% eines Polyesterharzes (PE) enthalten ist.

8. Effektpigmente enthaltende, lösemittelhaltige Pigmentpaste (PP) nach einem der Ansprüche 1 bis 7, **dadurch gekennzeichnet, dass** das Polyesterharz ein gewichtsmittleres Molekulargewicht von 2000 bis 20000 g/mol, eine Säurezahl von 3 bis 50 mgKOH/g und eine Hydroxylzahl von 30 bis 500 mg KOH/g hat.

9. Effektpigmente enthaltende, lösemittelhaltige Pigmentpaste (PP) nach einem der Ansprüche 1 bis 8, **dadurch gekennzeichnet, dass** 4 bis 7 Gew.-% eines Melaminharzes enthalten ist.

10. Effektpigmente enthaltende, lösemittelhaltige Pigmentpaste (PP) nach einem der Ansprüche 1 bis 9, **dadurch gekennzeichnet, dass** als Melaminharz ein high-Imino Butanol-verethertes Melaminharz enthalten ist.

11. Effektpigmente enthaltende, lösemittelhaltige Pigmentpaste (PP) nach einem der Ansprüche 1 bis 10, **dadurch gekennzeichnet, dass** 0,1 bis 0,3 Gew.-% eines Verdickers auf Harnstoffbasis enthalten ist.

12. Effektpigmente enthaltende, lösemittelhaltige Pigmentpaste (PP) nach einem der Ansprüche 1 bis 11, **dadurch gekennzeichnet, dass** der Verdicker auf Harnstoffbasis ein Polyurethan-modifizierter Harnstoff ist.

13. Effektpigmente enthaltende, lösemittelhaltige Pigmentpaste (PP) nach einem der Ansprüche 1 bis 12, **dadurch gekennzeichnet, dass** 40 bis 70 Gew.-% Lösemittel enthalten ist.

14. Effektpigmente enthaltende, lösemittelhaltige Pigmentpaste (PP) nach einem der Ansprüche 1 bis 13, **dadurch gekennzeichnet, dass** mindestens 10 Gew.-%, bezogen auf die gesamte Zusammensetzung der Pigmentpaste (PP), Butylacetat im Lösemittelanteil enthalten ist.

15. Verwendung von der blättchenförmige Effektpigmente enthaltenden, lösemittelhaltigen Pigmentpaste (PP) gemäß einem der Ansprüche 1 bis 14 in lösemittelhaltigen Beschichtungsstoffen (B).

16. Verfahren zur Herstellung von lösemittelhaltigen Beschichtungsstoffen (B) unter Verwendung einer blättchenförmige Effektpigmente enthaltenden, lösemittelhaltigen Pigmentpaste (PP) gemäß einem der Ansprüche 1 bis 14.

17. Lösemittelhaltige Beschichtungsstoffe (B) enthaltend mindestens eine blättchenförmige Effektpigmente enthaltende, lösemittelhaltige Pigmentpaste (PP) gemäß einem der Ansprüche 1 bis 14.

## Claims

1. Solventborne pigment paste (PP) comprising effect pigments, **characterized in that** it comprises, based in each case on the overall composition of the pigment paste (PP),
(A) 10% to 30% by weight of at least one lamellar effect pigment (P),
(B) 0.1% to 2.0% by weight of a waxlike compound (W),
(C) 0.1% to 3.0% by weight of cellulose acetobutyrate (CAB),
(D) 2.0% to 20% by weight of a polyester resin (PE),
(E) 2.0% to 10% by weight of a melamine resin,
(F) 0.05% to 0.5% by weight of a urea-based thickener,
(G) 30% to 80% by weight of organic solvents.

2. Solventborne pigment paste (PP) comprising effect pigments, according to Claim 1, **characterized in that** said lamellar effect pigment is a mica pigment and/or metallic effect pigment.

3. Solventborne pigment paste (PP) comprising effect pigments, according to Claim 1 and 2, **characterized in that** it comprises 15% to 25% by weight of a lamellar effect pigment (P).

4. Solventborne pigment paste (PP) comprising effect pigments, according to any of Claims 1 to 3, **characterized in that** it comprises 0.5% to 1.5% by weight of a waxlike compound (W).

5. Solventborne pigment paste (PP) comprising effect pigments, according to any of Claims 1 to 4, **characterized in that** the waxlike compound (W) is a polyolefin wax.

6. Solventborne pigment paste (PP) comprising effect pigments, according to any of Claims 1 to 5, **characterized in that** it comprises 0.5% to 2.5% by weight of cellulose acetobutyrate (CAB).

7. Solventborne pigment paste (PP) comprising effect pigments, according to any of Claims 1 to 6, **characterized in that** it comprises 5.0% to 15% by weight of a polyester resin (PE).

8. Solventborne pigment paste (PP) comprising effect pigments, according to any of Claims 1 to 7, **characterized in that** the polyester resin has a weight-average molecular weight of 2000 to 20 000 g/mol, an acid number of 3 to 50 mg KOH/g and a hydroxyl number of 30 to 500 mg KOH/g.

9. Solventborne pigment paste (PP) comprising effect pigments, according to any of Claims 1 to 8, **characterized in that** it comprises 4% to 7% by weight of a melamine resin.

10. Solventborne pigment paste (PP) comprising effect pigments, according to any of Claims 1 to 9, **characterized in that** said melamine resin is a high-imino butanol-etherified melamine resin.

11. Solventborne pigment paste (PP) comprising effect pigments, according to any of Claims 1 to 10, **characterized in that** it comprises 0.1% to 0.3% by weight of a urea-based thickener.

12. Solventborne pigment paste (PP) comprising effect pigments, according to any of Claims 1 to 11, **characterized in that** the urea-based thickener is a polyurethane-modified urea.

13. Solventborne pigment paste (PP) comprising effect pigments, according to any of Claims 1 to 12, **characterized in that** it comprises 40% to 70% by weight of solvent.

14. Solventborne pigment paste (PP) comprising effect pigments, according to any of Claims 1 to 13, **characterized in that** it comprises at least 10% by weight, based on the overall composition of the pigment paste (PP), of butyl acetate in the solvent fraction.

15. Use of the solventborne pigment paste (PP) comprising lamellar effect pigments, according to any of Claims 1 to 14, in solventborne coating materials (B).

16. Process for producing solventborne coating materials (B) using a solventborne pigment paste (PP) comprising lamellar effect pigments, according to any of Claims 1 to 14.

17. Solventborne coating materials (B) comprising at least one solventborne pigment paste (PP) comprising lamellar effect pigments, according to any of Claims 1 to 14.

## Revendications

1. Pâte pigmentaire (PP) contenant un/des pigment(s) conférant un effet, contenant un/des solvant (s), **caractérisée en ce qu'**elle contient, à chaque fois par rapport à la composition totale de la pâte pigmentaire (PP),
(A) 10 à 30% en poids d'au moins un pigment (P) conférant un effet, sous forme de lamelles,
(B) 0,1 à 2,0% en poids d'un composé de type cire (W),
(C) 0,1 à 3,0% en poids d'acétobutyrate de cellulose (CAB),
(D) 2,0 à 20% en poids d'une résine de polyester (PE),
(E) 2,0 à 10% en poids d'une résine de mélamine,
(F) 0,05 à 0,5% en poids d'un épaississant à base d'urée,
(G) 30 à 80% en poids de solvants organiques.

2. Pâte pigmentaire (PP) contenant un/des pigment (s) conférant un effet, contenant un/des solvant(s), selon la revendication 1, **caractérisée en ce qu'**un pigment conférant un effet de type mica et/ou métallique est contenu comme pigment conférant un effet, sous forme de lamelles.

3. Pâte pigmentaire (PP) contenant un/des pigment (s) conférant un effet, contenant un/des solvant(s), selon la revendication 1 et 2, **caractérisée en ce qu'**elle contient 15 à 25% en poids d'un pigment (P) conférant un effet, sous forme de lamelles.

4. Pâte pigmentaire (PP) contenant un/des pigment(s) conférant un effet, contenant un/des solvant(s), selon l'une quelconque des revendications 1 à 3, **caractérisée en ce qu'**elle contient 0,5 à 1,5% en poids d'un composé (W) de type cire.

5. Pâte pigmentaire (PP) contenant un/des pigment(s) conférant un effet, contenant un/des solvant (s), selon l'une quelconque des revendications 1 à 4, **caractérisée en ce que** le composé (W) de type cire est une cire de polyoléfine.

6. Pâte pigmentaire (PP) contenant un/des pigment (s) conférant un effet, contenant un/des solvant (s), selon l'une quelconque des revendications 1 à 5, **caractérisée en ce qu'**elle contient 0,5 à 2,5% en poids d'acétobutyrate de cellulose (CAB).

7. Pâte pigmentaire (PP) contenant un/des pigment (s) conférant un effet, contenant un/des solvant(s), selon l'une quelconque des revendications 1 à 6, **caractérisée en ce qu'**elle contient 5,0 à 15% en poids d'une résine de polyester (PE).

8. Pâte pigmentaire (PP) contenant un/des pigment(s) conférant un effet, contenant un/des solvant(s), selon l'une quelconque des revendications 1 à 7, **caractérisée en ce que** la résine de polyester présente un poids moléculaire pondéral moyen de 2000 à 20.000 g/mole, un indice d'acide de 3 à 50 mg de KOH/g et un indice d'hydroxyle de 30 à 500 mg de KOH/g.

9. Pâte pigmentaire (PP) contenant un/des pigment(s) conférant un effet, contenant un/des solvant (s), selon l'une quelconque des revendications 1 à 8, **caractérisée en ce qu'**elle contient 4 à 7% en poids d'une résine de mélamine.

10. Pâte pigmentaire (PP) contenant un/des pigment(s) conférant un effet, contenant un/des solvant (s), selon l'une quelconque des revendications 1 à 9, **caractérisée en ce qu'**elle contient, comme résines de mélamine, une résine de mélamine éthérifiée par du butanol, à haute teneur en fonction imino.

11. Pâte pigmentaire (PP) contenant un/des pigment (s) conférant un effet, contenant un/des solvant(s), selon l'une quelconque des revendications 1 à 10, **caractérisée en ce qu'**elle contient 0,1 à 0,3% en poids d'un épaississant à base d'urée.

12. Pâte pigmentaire (PP) contenant un/des pigment(s) conférant un effet, contenant un/des solvant(s), selon l'une quelconque des revendications 1 à 11, **caractérisée en ce que** l'épaississant à base d'urée est une urée modifiée par polyuréthane.

13. Pâte pigmentaire (PP) contenant un/des pigment(s) conférant un effet, contenant un/des solvant (s), selon l'une quelconque des revendications 1 à 12, **caractérisée en ce qu'**elle contient 40 à 70% en poids de solvant.

14. Pâte pigmentaire (PP) contenant un/des pigment(s) conférant un effet, contenant un/des solvant(s), selon l'une quelconque des revendications 1 à 13, **caractérisée en ce qu'**elle contient au moins 10% en poids, par rapport à la composition totale de la pâte pigmentaire (PP), d'acétate de butyle dans la proportion de solvant(s).

15. Utilisation de la pâte pigmentaire (PP) contenant un/des pigment (s) conférant un effet, sous forme de lamelles, contenant un/des solvant(s), selon l'une quelconque des revendications 1 à 14, dans des matériaux de revêtement (B) contenant un/des solvant(s).

16. Procédé pour la production de matériaux de revêtement (B) contenant un/des solvant (s) à l'aide d'une pâte pigmentaire (PP) contenant un/des pigment(s) conférant un effet, sous forme de lamelles, contenant un/des solvant(s), selon l'une quelconque des revendications 1 à 14.

17. Matériaux de revêtement (B) contenant un/des solvant(s) contenant au moins une pâte pigmentaire (PP) contenant un/des pigment(s) conférant un effet, sous forme de lamelles, contenant un/des solvant (s), selon l'une quelconque des revendications 1 à 14.
